(19) Europäisches Patentamt
European Patent Office
Office européen des brevets

(11) EP 0 423 767 B1

(12) EUROPEAN PATENT SPECIFICATION

(45) Date of publication and mention of the grant of the patent: **06.03.1996 Bulletin 1996/10**

(51) Int Cl.⁶: **C08L 77/00**, C08L 81/02, C08L 51/00, C08K 3/00

(21) Application number: **90119929.9**

(22) Date of filing: **17.10.1990**

(54) **Thermoplastic resin composition and method for preparing the same**

Thermoplastische Harzzusammensetzung und dessen Verfahren zur Herstellung

Composition de résine thermoplastique et méthode pour préparer celle-ci

(84) Designated Contracting States:
**DE FR GB IT NL SE**

(30) Priority: **20.10.1989 JP 273000/89**

(43) Date of publication of application:
**24.04.1991 Bulletin 1991/17**

(73) Proprietors:
- **NIPPON PETROCHEMICALS COMPANY, LIMITED**
**Tokyo (JP)**
- **NIPPON OIL AND FATS COMPANY, LIMITED**
**Chiyoda-ku Tokyo (JP)**

(72) Inventors:
- **Sakazume, Suehiro**
**Fujisawa-shi, Kanagawa-ken (JP)**
- **Orikasa, Yuichi**
**Yokohama-shi, Kanagawa-ken (JP)**

(74) Representative:
**Strehl Schübel-Hopf Groening & Partner**
**Maximilianstrasse 54**
**D-80538 München (DE)**

(56) References cited:
**EP-A- 0 304 040**
**EP-A- 0 304 041**
**EP-A- 0 338 544**
**EP-A- 0 345 094**

- **PATENT ABSTRACTS OF JAPAN, vol. 9, no. 1 (C-259)(1724) 5 January 1985 & JP-A-59 155 462 ( DAINIPPON INK K.K.K. ) 4 September 1984**
- **Chemical Abstracts, Vol. 105, 1986, abstract 79964k**

EP 0 423 767 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### BACKGROUND OF THE INVENTION

#### (1) Field of the Invention

The present invention relates to a thermoplastic resin composition having excellent impact resistance, heat resistance, oil resistance and water resistance, and to a method for preparing the same. This composition of the present case can be widely utilized as materials for automobile parts, electrical, electronic and machine parts, industrial parts, and the like.

#### (2) Description of the Prior Art

Polyamide resins and polyarylene sulfide resins are used in many fields because of excellent mechanical characteristics, heat resistance, chemical resistance and the like.

In recent years, various researches have been carried out with the intention of heightening functions of products and decreasing costs thereof, and above all, it has been attempted to utilize various features of plural plastics for the purpose of adding many functions to the products.

The polyamide resins are excellent in moldability, heat stability, wear resistance and solvent resistance, and thus they are employed in various kinds of molded articles. However, these polyamide resins have a high hygroscopicity, and therefore the dimensional stability thereof is poor, so that applications of these resins are limited at times.

On the other hand, the polyarylene sulfide resins are excellent in heat resistance and flame retardance but poor in ductility and thus brittle.

Accordingly, it can be presumed that if the polyamide resin (I) is blended with the polyarylene sulfides resin (II), a resin composition can be obtained in which the features inherent in the polyamide resin (I) are maintained and the drawbacks thereof are eliminated and to which the features of the polyarylene sulfides resin (II) are added.

It has been attempted to improve physical properties by combining the polyamide resin with the polyarylene sulfides resin. However, they are different from each other in chemical structure, and for this reason, any affinity is not present therebetween, so that features of these resins can scarcely be utilized.

JP-A-6 153 356 relates to a composition being composed of a poly(phenylenesulfide) resin, a polyamide resin, and an olefin copolymer containing carboxylic groups and/or epoxide groups.

A thermoplastic resin composition comprising (I) an aromatic polyester resin, (II) at least one kind of resin selected from the group consisting of a polyphenylene ether resin, a mixture of the polyphenylene ether resin and a styrene polymer, a polycarbonate resin, and a polyarylene sulfide resin, and (III) a specific multi-phase structure thermoplastic resin are disclosed in EP-A-304 040.

The EP-A-304 041 relates to a thermoplastic resin composition comprising besides the above mentioned component (III), a polyamide resin, and at least one kind of resin selected from the group consisting of a polyphenylene ether resin, a mixture of the polyphenylene ether resin and a styrene polymer and a polycarbonate resin.

### SUMMARY OF THE INVENTION

Therefore, an object of the present invention is to provide a thermoplastic resin composition which comprises a polyamide resin and a polyarylene sulfide resin and which effectively prevents delamination at the time of the molding thereof and is excellent in heat resistance, dimensional stability, moldability, impact resistance and oil resistance. Another object of the present invention is to provide a method for preparing the aforesaid thermoplastic resin composition.

The inventors of the present application have intensively researched to solve the above-mentioned problems. As a result, they have found that when a specific multi-phase structure thermoplastic resin is blended, as a compatibilizing agent, with a polyamide resin and a polyarylene sulfide resin, the heat resistance of the polyarylene sulfide resin can be added to the resultant composition and impact resistance and oil resistance thereof are also improved, while dimensional stability, moldability and the like are maintained. It has also been found that the above composition can be most suitably manufactured by melting/kneading of these raw materials at a specific temperature. The present invention has been achieved on the basis of this knowledge.

That is, the first aspect of the present invention is directed to a thermoplastic resin composition containing

(I) 99 to 1% by weight of a polyamide resin,
(II) 1 to 99% by weight of a polyarylene sulfide resin and,
(III) 0.1 to 100 parts by weight, based on 100 parts by weight of the aforesaid resins (I) + (II), of a multi-phase structure thermoplastic resin which is a graft copolymer comprising 5 to 95% by weight of an epoxy group-containing

olefin copolymer and 95 to 5% by weight of a vinyl polymer or copolymer obtained from at least one vinyl monomer, selected from the group consisting of vinyl aromatic monomers, acrylate and methacrylate monomers, acrylonitrile and methacrylonitrile monomers, vinyl ester monomers, acryl amide and methacryl amide monomers, and monoesters and diesters of maleic anhydride and maleic acid, wherein the number average molecular weight of said vinyl polymer or copolymer in said multi-phase structure thermoplastic resin is from 5 to 10 000, either of both the components being in the state of a dispersion phase having a particle diameter of 0.001 to 10 μm in the other component.

Furthermore, the second aspect of the present invention is directed to a method for preparing a thermoplastic resin composition which comprises the step of melting and mixing a polyamide resin (I) and a polyarylene sulfide resin (II) with

a graft polymerization precursor which is obtained by first adding at least one vinyl monomer, selected from the group consisting of vinyl aromatic monomers, acrylate and methacrylate monomers, acrylonitrile and methacrylonitrile monomers, vinyl ester monomers, acryl amide and methacryl amide monomers, and monoesters and diesters of maleic anhydride and maleic acid, at least one radical polymerizable organic peroxide and a radical polymerization initiator to an aqueous suspension of an epoxy group-containing olefin copolymer, heating the suspension under such conditions that the decomposition of the radical polymerization initiator does not occur substantially, in order to impregnate the epoxy group-containing olefin copolymer with the vinyl monomer, the radical polymerizable organic peroxide and the radical polymerization initiator, and then raising the temperature of this aqueous suspension, when the degree of the impregnation has reached 50% by weight or more of the original total weight of the vinyl monomer, the peroxide and the initiator, in order to copolymerize the vinyl monomer with the radical polymerizabl organic peroxide in the epoxy group-containing olefin copolymer,
or alternatively melting and mixing, with the above-mentioned resins (I) and (II), a multi-phase structure thermoplastic resin (III) obtained by previously melting/kneading the graft polymerization precursor at a temperature in the range of from 100 to 300°C.

DETAILED DESCRIPTION OF THE INVENTION

No particular restriction is put on a polyamide resin (I) used in the present invention, but examples of the polyamide resin (I) include usual aliphatic polyamides such as polycapramide (6-nylon), polyhexamethylene adipamide (6,6-nylon), polyhexamethylene sebacamide (6,10-nylon), polyundecamethylene adipamide (6,11-nylon), polyhexamethylene dodecamide (6,12-nylon), polyundecaneamide (11-nylon), polydodecaneamide (12-nylon) and polytetramethylene adipamide (4,6-nylon); copolymerized polyamides containing them as the main constitutional components; and aromatic polyamide resins such as polyhexamethyleneterephthalamide (6T-nylon), polyhexamethyleneisophthalamide (6I-nylon) and polymetaxylylene adipamide (MXD6). The particularly preferable polyamide resins are 6-nylon and 6,6-nylon.

The polyarylene sulfide resin used in the present invention is a polymer represented by the general formula

$$\{Ar-S\}_n$$

wherein Ar is a divalent aromatic residue containing at least one carbon six-membered ring such as

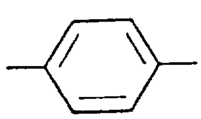 , 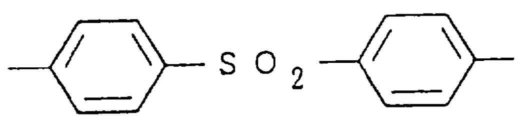 ,

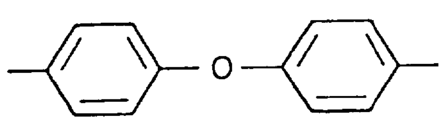 ,

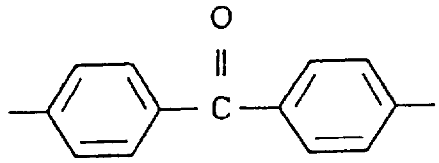

,

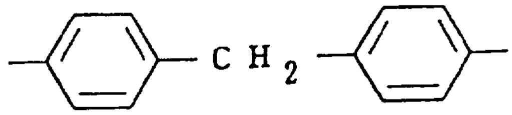

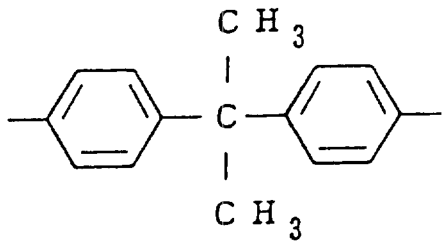

Furthermore, the above-mentioned aromatic ring may have a substituent such as F, Cl, Br or $CH_3$.

The particularly typical polyarylene sulfide is polyphenylene sulfide (hereinafter referred to as "PPS") represented by the general formula:

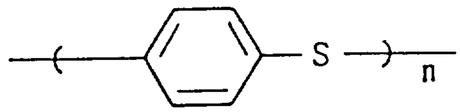

A method for preparing PPS is disclosed in Japanese Patent Publication No. 54-3368. That is, PPS may be prepared by reacting paradichlorobenzene with sodium sulfide at a temperature of 160 to 250°C under pressure in a N-methylpyrrolidone solution.

The epoxy group-containing olefin copolymer in the multi-phase structure thermoplastic resin used in the present invention is a copolymer of an olefin formed by a high-pressure radical polymerization and an unsaturated glycidyl group-containing monomer, or a terpolymer of an olefin, an unsaturated glycidyl group-containing monomer and another unsaturated monomer, or a multicomponent copolymer. The particularly preferable olefin of the copolymer is ethylene, and the preferable copolymer comprises 60 to 99.5% by weight of ethylene, 0.5 to 40% by weight of the glycidyl group-containing monomer and 0 to 39.5% by weight of another unsaturated monomer.

Examples of the unsaturated glycidyl group-containing monomer include glycidyl acrylate, glycidyl methacrylate, itaconic acid monoglycidyl ester, butenetricarboxylic acid monoglycidyl ester, butenetricarboxylic acid diglycidyl ester, butenetricarboxylic acid triglycidyl ester, vinyl glycidyl ethers and glycidyl esters of α-chloroallyl, maleic acid, crotonic acid and fumaric acid, allyl glycidyl ether, glycidyloxy ethylvinyl ether, glycidyl ethers such as styrene p-glycidyl ether, and p-glycidyl styrene. The particularly preferable ones are glycidyl methacrylate and allyl glycidyl ether.

Other examples of the unsaturated monomers include olefins, vinyl esters, α,β-ethylenic unsaturated carboxylic acids and their derivatives. Typical examples of such unsaturated monomers include olefins such as propylene, butene-1 , hexene-1 , decene-1, octene-1 and styrene, vinyl esters such as vinyl acetate, vinyl propionate and vinyl benzoate, acrylic acid, methacrylic acid, esters such as methyl, ethyl, propyl, butyl, 2-ethylhexyl, cyclohexyl, dodecyl and octadecyl acrylates and methacrylates, maleic acid, maleic anhydride, itaconic acid, fumaric acid, maleic monoesters and diesters, vinyl ethers such as vinyl chloride, vinyl methyl ether and vinyl ethyl ether, and acrylic amide compounds. Particularly, acrylic and methacrylic esters are preferable.

Typical examples of the epoxy group-containing olefin copolymer include ethylene-glycidyl methacrylate copolymer; ethylene-vinyl acetate-glycidyl methacrylate copolymer; ethylene-ethyl acrylate-glycidyl methacrylate copolymer; ethylene-carbon monoxide-glycidyl methacrylate copolymer; ethylene-glycidyl acrylate copolymer; and ethylene-vinyl acetate-glycidyl acrylate copolymer. Above all, ethylene-glycidyl methacrylate copolymers are preferred.

These epoxy group-containing olefin copolymers can be used in a mixture thereof.

The epoxy group-containing olefin copolymer may be prepared by a high-pressure radical polymerization, i.e., by simultaneously or stepwise contacting and polymerizing a monomer mixture of 60 to 99.5% by weight of the above-mentioned ethylene, 0.5 to 40% by weight of one or more unsaturated glycidyl group-containing monomer, and 0 to 39.5% by weight of at least one other ethylenic unsaturated monomer in the presence of 0.0001 to 1% by weight of a radical polymerization initiator based on the total weight of all the monomers at a polymerization pressure of 500 to 4,000 bar ($kg/cm^2$), preferably 1,000 to 3,500 bar ($kg/cm^2$), at a reaction temperature of 50 to 400°C, preferably 100 to 350°C, using a chain transfer agent and, if necessary, some auxiliary agents, in an autoclave or tubular reactor.

Examples of the above-mentioned radical polymerization initiator include usual initiators such as peroxides, hydroperoxides, azo-compounds, amine oxide compounds and oxygen.

Examples of the chain transfer agent include hydrogen, propylene, butene-1, saturated aliphatic hydrocarbons having 1 to 20 carbon atoms -such as methane, ethane, propane, butane, isobutane, n-hexane, n-heptane and cycloparaffins, chloroform and carbon tetrachloride, saturated aliphatic alcohols having 1 to 20 or more carbon atoms such as methanol, ethanol, propanol and isopropanol, saturated aliphatic carbonyl compounds having 1 to 20 or more carbon atoms such as carbon dioxide, acetone and methyl ethyl ketone, and aromatic compounds such as toluene, diethylbenzene and xylene.

Another example of the epoxy group-containing olefin copolymer used in the present invention is a modified compound prepared by adding the above-mentioned unsaturated glycidyl group-containing monomer to a conventional olefin homopolymer or copolymer.

Examples of the above-mentioned olefin polymer include homopolymers such as low-density, medium-density and high-density polyethylenes, polypropylene, polybutene-1 and poly-4-methylpentene-1, copolymers of ethylene as the main component and other α-olefins such as ethylene-propylene copolymer, ethylene-butene-1 copolymer, ethylene-hexene-1 copolymer, ethylene-4-methylpentene-1 copolymer and ethylene-octene-1 copolymer, a copolymer of propylene as the main component and another α-olefin such as propylene-ethylene block copolymer, ethylene-vinyl acetate copolymer, ethylene-acrylic acid copolymer, ethylene-methacrylic acid copolymer, polymers of ethylene and methyl, ethyl, propyl, isopropyl and butyl acrylate and methacrylate, ethylene-maleic acid copolymer, ethylene-propylene copolymer rubber, ethylene-propylene-diene copolymer rubber, liquid polybutadiene, ethylene-vinyl acetate-vinyl chloride copolymer, mixtures thereof, and mixtures of these polymers and different kinds of synthetic resins or rubbers.

Typical examples of the vinyl polymer and copolymer in the multi-phase structure thermoplastic resin used in the present invention include polymers and copolymers prepared by polymerizing one or more of vinyl monomers such as vinyl aromatic monomers, for example, styrene, nucleus-substituted styrenes such as methylstyrene, dimethylstyrene, ethylstyrene, isopropylstyrene and chlorostyrene, and α-substituted styrenes, for example, vinyl aromatic monomers such as α-methylstyrene and α-ethylstyrene, acrylate and methacrylate monomers, for example, alkyl esters having 1 to 7 carbon atoms of acrylic acid or methacrylic acid such as methyl, ethyl, propyl, isopropyl and butyl acrylate and methacrylate, acrylonitrile and methacrylonitrile monomers, vinyl ester monomers such as vinyl acetate and vinyl propionate, acrylamide and methacrylamide monomers, and monoesters and diesters of maleic anhydride and maleic acid. Above all, particularly preferable are the vinyl aromatic monomers, acrylate and methacrylate monomers, and vinyl ester monomers.

The multi-phase structure thermoplastic resin used in the present invention is an epoxy group-containing olefin copolymer, or a vinyl polymer or copolymer matrix in which another vinyl polymer or copolymer, or epoxy group-containing olefin copolymer is uniformly dispersed in a spherical form.

The polymer dispersed in the multi-phase structure thermoplastic resin has a particle diameter of 0.001 to 10 μm, preferably 0.01 to 5 μm. When the particle diameter of the dispersed polymer is less than 0.001 μm or is more than 5 μm, the compatibility of the polyamide resin with the polyarylene sulfide resin deteriorates, and in consequence, for example, appearance is poor and the improvement effect of impact resistance is unpreferably insufficient.

The vinyl polymer or copolymer in the multi-phase thermoplastic resin of the present invention has a number average polymerization degree of 5 to 10,000, preferably 10 to 5,000.

When the number average polymerization degree is less than 5, impact resistance of the thermoplastic resin composition regarding the present invention can be improved, but heat resistance deteriorates unpreferably. Conversely, when it is in excess of 10,000, melting viscosity is high, moldability deteriorates, and surface gloss falls off unpreferably.

The multi-phase thermoplastic resin used in the present invention comprises 5 to 95% by weight, preferably 20 to 90% by weight, of the epoxy group-containing olefin copolymer. Therefore, the content of the vinyl polymer or copolymer is from 95 to 5% by weight, preferably from 80 to 10% by weight.

When the epoxy group-containing olefin copolymer is less than 5% by weight, the improvement effect of impact resistance is unpreferably insufficient. When it is more than 95% by weight, heat resistance unpreferably deteriorates, though the improvement effect of impact resistance can be obtained sufficiently.

As a grafting technique used to prepare the multiphase structure thermoplastic resin regarding the present invention, there may be employed a well known process such as a chain transfer process or an ionizing radiation process, but the following process is most preferable, because grafting efficiency is high, secondary cohesion due to heat does not occur, and thus performance can be exerted effectively.

Now, a method for preparing the thermoplastic resin composition of the present invention will be described in detail.

That is, in water is suspended 100 parts by weight of the epoxy group-containing olefin copolymer. Separately, a solution is prepared by dissolving, in 5 to 400 parts by weight of at least one vinyl monomer, 0.1 to 10 parts by weight, based on 100 parts by weight of the vinyl monomer, of one or a mixture of radical polymerizable organic peroxides represented by the undermentioned general formula (a) or (b) and 0.01 to 5 parts by weight, based on 100 parts by weight of the total of the vinyl monomer and the radical polymerizable organic peroxide, of a radical polymerization initiator in which a decomposition temperature to obtain a half-life period of 10 hours is from 40 to 90°C. The thus prepared solution was then added to the above-mentioned suspension. Afterward, the mixture is heated under conditions that the decomposition of the radical polymerization initiator does not occur substantially, in order to impregnate the epoxy group-containing olefin copolymer with the vinyl monomer, the radical polymerizable organic peroxide and the radical polymerization initiator. When the impregnation ratio has reached 50% by weight or more of the original total weight of the monomer, the peroxide and the initiator, the temperature of this aqueous suspension is raised to copolymerize the vinyl monomer with the radical polymerizable organic peroxide in the epoxy group-containing olefin copolymer, thereby obtaining a graft polymerization precursor (A).

This graft polymerization precursor (A) also is the multi-phase structure thermoplastic resin. Therefore, this graft polymerization precursor may be directly mixed under melting with the polyamide resin and the polyarylene sulfide resin.

Furthermore, the multi-phase structure thermoplastic resin (III) regarding the present invention may be prepared by kneading the graft polymerization precursor (A) under melting at a temperature of from 100 to 300°C. At this time, the graft polymerization precursor may be kneaded under melting with an epoxy group-containing olefin copolymer (B), or a vinyl polymer or copolymer (C) so as to obtain the multi-phase structure thermoplastic resin (III). What is most preferable is the multi-phase structure thermoplastic resin obtained by kneading the graft polymerization precursor.

The above-mentioned radical polymerizable organic peroxide is a compound represented by the general formula (a):

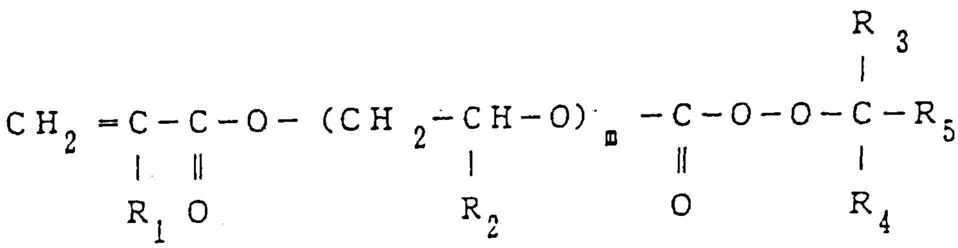 (a)

(wherein $R_1$ is a hydrogen atom or an alkyl group having 1 or 2 carbon atoms, $R_2$ is a hydrogen atom or a methyl group, each of $R_3$ and $R_4$ is an alkyl group having 1 to 4 carbon atoms, $R_5$ is an alkyl group having 1 to 12 carbon atoms, a phenyl group, an alkyl-substituted phenyl group or a cycloalkyl group having 3 to 12 carbon atoms, m is 1 or 2).

Alternatively, the radical polymerizable organic peroxide is a compound represented by the general formula (b):

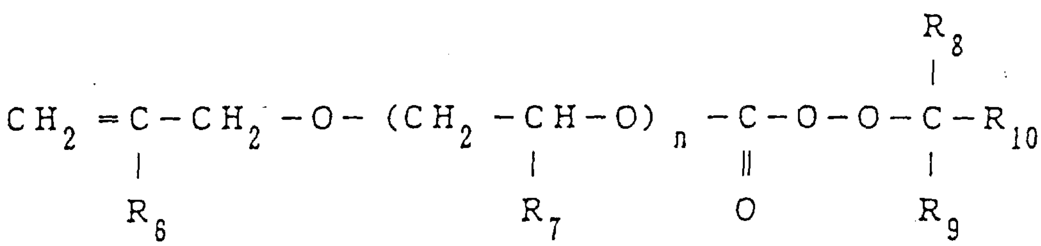 (b)

(wherein $R_6$ is a hydrogen atom or an alkyl group having 1 to 4 carbon atoms, $R_7$ is a hydrogen atom or a methyl group, each of $R_8$ and $R_9$ is an alkyl group having 1 to 4 carbon atoms, $R_{10}$ is an alkyl group having 1 to 12 carbon atoms, a phenyl group, an alkyl-substituted phenyl group or a cycloalkyl group having 3 to 12 carbon atoms, n is 0, 1 or 2).

Typical examples of the radical polymerizable organic peroxides represented by the general formula (a) include t-butylperoxyacryloyloxyethyl carbonate, t-amylperoxyacryloyloxyethyl carbonate, t-hexylperoxyacryloyloxyethyl carbonate, 1,1,3,3-tetramethylbutylperoxyacryloyloxyethyl carbonate, cumylperoxyacryloyloxyethyl carbonate, p-isopropylcumylperoxyacryloyloxyethyl carbonate, t-butylperoxymethacryloyloxyethyl carbonate, t-amylperoxymethacryloyloxyethyl carbonate, t-hexylperoxymethacryloyloxyethyl carbonate, 1,1,3,3-tetramethylbutylperoxymethacryloyloxyethyl carbonate, cumylperoxymethacryloyloxyethyl carbonate, p-isopropylcumylperoxymethacryloyloxyethyl carbonate, t-butylperoxyacryloyloxyethoxyethyl carbonate, t-amylperoxyacryloyloxyethoxyethyl carbonate, t-hexylperoxyacryloyloxyethoxyethyl carbonate, 1,1,3,3-tetramethylbutylperoxyacryloyloxyethoxyethyl carbonate, cumylperoxyacryloyloxyethoxyethyl carbonate, p-isopropylcumylperoxyacryloyloxyethoxyethyl carbonate, t-butylperoxymethacryloyloxyethoxyethyl carbonate, t-amylperoxymethacryloyloxyethoxyethyl carbonate, t-hexylperoxymethacryloyloxyethoxyethyl carbonate, 1,1,3,3-tetramethylbutylperoxymethacryloyloxyethoxyethyl carbonate, cumylperoxymethacryloyloxyethoxyethyl carbonate, p-isopropylcumylperoxymethacryloyloxyethoxyethyl carbonate, t-butylperoxyacryloyloxyisopropyl carbonate, t-amylperoxyacryloyloxyisopropyl carbonate, t-hexylperoxyacryloyloxyisopropyl carbonate, 1,1,3,3-tetramethylbutylperoxyacryloyloxyisopropyl carbonate, cumylperoxyacryloyloxyisopropyl carbonate, p-isopropylcumylperoxyacryloyloxyisopropyl carbonate, t-butylperoxymethacryloyloxyisopropyl carbonate, t-amylperoxymethacryloyloxyisopropyl carbonate, t-hexylperoxymethacryloyloxyisopropyl carbonate, 1,1,3,3-tetramethylbutylperoxymethacryloyloxyisopropyl carbonate, p-menthaneperoxyallyl carbonate, cumylperoxymethacryloyloxyisopropyl carbonate and p-isopropylcumylperoxymethacryloyloxyisopropyl carbonate.

Furthermore, typical examples of the compounds represented by the general formula (b) include t-butylperoxyallyl carbonate, t-amylperoxyallyl carbonate, t-hexylperoxyallyl carbonate, 1,1,3,3-tetramethylbutylperoxyallyl carbonate, p-menthaneperoxyallyl carbonate, cumylperoxyallyl carbonate, t-butylperoxymethallyl carbonate, t-amylperoxymethallyl carbonate, t-hexylperoxymethallyl carbonate, 1,1,3,3-tetramethylbutylperoxymethallyl carbonate, p-menthaneperoxymethallyl carbonate, cumylperoxymethallyl carbonate, t-butylperoxyallyloxyethyl carbonate, t-amylperoxyallyloxyethyl carbonate, t-hexylperoxyallyloxyethyl carbonate, t-butylperoxymethallyloxyethyl carbonate,t-amylperoxymethallyloxyethyl carbonate, t-hexylperoxymethallyloxyethyl carbonate, t-butylperoxyallyloxyisopropyl carbonate, t-amylperoxyallyloxyisopropyl carbonate, t-hexyl-peroxyallyloxyisopropyl carbonate, t-butylperoxymethallyloxyisopropyl carbonate, t-amylperoxymethallyloxyisopropyl carbonate and t-hexylperoxymethallyloxyisopropyl carbonate.

Of these compounds, preferable ones are t-butylperoxyacryloyloxyethyl carbonate, t-butylperoxymethacryloyloxyethyl carbonate, t-butylperoxyallyl carbonate and t-butylperoxymethallyl carbonate.

In the present invention, the inorganic filler can be used in an amount of 0 to 150 parts by weight based on 100 parts of the resin components (I) + (II) + (III).

The inorganic filler may be used in granular, lamellar, scaly, needle, spherical, balloons and fibrous forms, and examples of these inorganic fillers include powdery and granular fillers such as calcium sulfate, calcium silicate, clay, diatomaceous earth, talc, alumina, siliceous sand, glass powder, iron oxide, metallic powder, graphite, silicon carbide, silicon nitride, silica, boron nitride, aluminum nitride and carbon black; lamellar and scaly fillers such as mica, glass plate, sericite, pyrophyllite, metallic foil, for example, aluminum flake, and graphite; balloon fillers such as Shirasu balloon, metallic balloon, glass balloon and pumice; and mineral fibers such as glass fiber, carbon fiber, graphite fiber, whisker, metallic fiber, silicon carbide fiber, asbestos and wollastonite.

When the content of the filler is in excess of 150 parts by weight, mechanical strength such as impact strength of molded articles deteriorates unpreferably.

The surface of the inorganic filler is preferably treated by the use of stearic acid, oleic acid, palmitic acid or a metallic salt thereof, paraffin wax, polyethylene wax or a modified material thereof, an organic silane, an organic borane or an organic titanate. The thermoplastic composition of the present invention can be prepared by melting/mixing the above-mentioned resin components at a temperature of from 150 to 350°C, preferably from 180 to 330°C. When this temperature is less than 150°C, the melting is incomplete, melting viscosity is high, and the mixing is insufficient. In consequence, phase separation and delamination take place unpreferably on molded articles. Conversely when it is in excess of 350°C, the resins to be mixed tend to decompose or gel unpreferably.

In melting and mixing, there may be used a usual kneader such as a Banbury's mixer, a pressing kneader, a kneading extruder, a twin-screw extruder or rolls.

In the present invention, the following materials can be additionally used, in so far as they do not deviate from the gist of the present invention. Examples of such materials include an inorganic flame retardant such as magnesium hydroxide or aluminum hydroxide, an organic flame retardant containing a halogen, phosphorus or the like, an organic filler such as wood meal, and additives such as an antioxidant, an ultraviolet inhibitor, a lubricant, a dispersant, a coupling agent, a foaming agent, a crosslinking agent and a colorant, other polyolefin resin, and engineering plastics such as aromatic polyester, polyphenylene ether, polycarbonate and ABS.

Now, the present invention will be described in more detail in reference to examples.

Reference Example 1 (Preparation of Multi-phase Structure Thermoplastic Resin)

In a 5-liter stainless steel autoclave was placed 2,500 g of pure water, and 2.5 g of polyvinyl alcohol was further dissolved therein as a suspending agent. To the solution was added 700 g of ethylene/glycidyl methacrylate copolymer as an epoxy group-containing olefin copolymer (content of glycidyl methacrylate 15% by weight, trade name Rexpearl RA-3150, made by Nippon Petrochemicals Co., Ltd., Rexpearl is a Registered Trademark, followed by stirring in a nitrogen atmosphere to suspend the same therein. Separately, in 300 g of styrene as a vinyl monomer were dissolved 1.5 g of benzoylperoxide as a radical polymerization initiator (trade name Nyper-B; made by Nippon Oils & Fats Co., Ltd., Nyper is a Registered Trademark) and 6 g of t-butylperoxymethacryloyloxyethyl carbonate as a radical polymerizable organic peroxide, and the resulting solution was then placed in the above-mentioned autoclave, followed by stirring.

Afterward, the autoclave was heated up to a temperature of 60 to 65°C, and stirring was then continued for 2 hours, so that the epoxy group-containing olefin copolymer was impregnated with the vinyl monomer containing the radical

polymerization initiator and the radical polymerizable organic peroxide. After it had been confirmed that the total amount of the impregnated vinyl monomer, radical polymerizable organic peroxide and radical polymerization initiator was 50% by weight or more of the original total weight thereof, the temperature of the mixture was raised up to a level of 80 to 85°C, and this temperature was then maintained for 7 hours to complete polymerization, followed by water washing and drying, thereby obtaining a graft polymerization precursor. A styrene polymer was extracted from this graft polymerization precursor with ethyl acetate, and according to measurement by the use of GPC, the number average polymerization degree of the styrene polymer was 900.

Next, this graft polymerization precursor was extruded at 200°C by a single screw extruder (trade name (not registered) "Labo" plasto-mill; made by Toyo Seiki Seisaku-sho Ltd.) to perform grafting reaction, whereby a multi-phase structure thermoplastic resin was obtained.

This multi-phase structure thermoplastic resin was then observed by a scanning electron microscope (trade name JEOL JSM T300; made by JEOL, Ltd., JEOL is a Registered Trademark), and it was found that the resin was a multi-phase structure thermoplastic resin in which spherical resin particles each having a diameter of 0.3 to 0.4 µm were uniformly dispersed.

In this case, the grafting efficiency of the styrene polymer was 77.1% by weight.

Examples 1 to 7

6,6-Nylon (I) (trade name Amiran CM 3001-N; made by Toray Industries, Inc., Amiran is a Registered Trademark) (which is represented by PA in Table 1), polyphenylene sulfide (II) (trade name Raiton R-4, made by Philips Petroleum Co., Ltd., Raiton is a Registered Trademark) (which is represented by PPS in Table 1) and the multi-phase structure thermoplastic resin obtained in the reference example were melted/mixed in a ratio shown in Table 1.

The melting/mixing process was carried out by dryblending the respective resin pellets and then feeding them into a one-directional twin-screw extruder having a cylinder temperature of 280°C and a screw diameter of 30 mm. Afterward, extrusion and the formation of granules followed. The latter were dried at 150°C for 3 hours and then injection-molded in order to prepare specimens.

Sizes and test procedures of the specimens were as follows:

(1) Specimens for notched Izod impact strength
13 mm x 65 mm x 6 mm (JIS K7110)
(2) Specimens for heat distortion temperature
13 mm x 130 mm x 6 mm (JIS K7207)
(3) Appearance of molded articles

The appearance of molded articles was ranked by visually observing a flow mark and the state of gloss, as follows:

(a) Flow mark:

◎: No flow mark was present.
O: The flow mark was slightly present.
X: The flow mark was present.

(b) State of gloss:

◎: The gloss was very excellent.
O: The gloss was good.
X: The gloss was poor.

Table 1

| | Example No. 1 | 2 | 3 | 4 | 5 | 6 | 7 |
|---|---|---|---|---|---|---|---|
| PA (wt%) | 20 | 20 | 40 | 50 | 60 | 70 | 80 |
| PPS (wt%) | 80 | 80 | 60 | 50 | 40 | 30 | 20 |
| Multi-phase Structure Thermoplastic Resin 1) (pts. wt.) | 5 | 15 | 15 | 15 | 15 | 15 | 15 |
| Notched Izod Impact Strength (kg•cm/cm) | 7 | 10 | 9 | 8 | 10 | 12 | 13 |
| Heat Distortion Temperature (°C) (18.6 $kg/cm^2$) | 182 | 196 | 190 | 183 | 175 | 170 | 167 |
| Surface Appearance (flow mark) | ◎ | ◎ | ◎ | ◎ | ◎ | ◎ | ◎ |
| Surface Appearance (gloss) | ◎ | ◎ | ◎ | ◎ | ◎ | ◎ | ◎ |

1) Parts by weight based on 100 parts by weight of the (PA + PPS) resins.

Comparative Examples 1 to 5

The same procedure as in Example 1 was effected except that ethylene/glycidyl methacrylate copolymer was used, and the results are set forth in Table 2.

Table 2

| | Comparative Example No. 1 | 2 | 3 | 4 | 5 | 6 |
|---|---|---|---|---|---|---|
| PA (wt%) | 20 | 40 | 50 | 50 | 60 | 80 |
| PPS (wt%) | 80 | 60 | 50 | 50 | 40 | 20 |
| Ethylene/Glycidyl Methacrylate Copolymer 1) (pts. wt.) | 15 | 20 | 10 | 20 | 15 | 20 |
| Notched Izod Impact Strength (kg•cm/cm) | 2.2 | 3.1 | 3.1 | 3.3 | 3.5 | 3.2 |
| Heat Distortion Temperature (°C) (18.6 kg/cm$^2$) | 145 | 126 | 121 | 114 | 111 | 109 |
| Surface Appearance (flow mark) | O | X | X | X | O | O |
| Surface Appearance (gloss) | X | O | X | X | X | O |

1) Parts by weight based on 100 parts by weight of the (PA + PPS) resins.

Examples 8 to 13

The same procedure as in Examples 1 to 7 was effected except that the multi-phase structure thermoplastic resin was replaced with the graft polymerization precursor obtained in the reference example, and that a glass fiber having an average fiber length of 5.0 mm and a diameter of 10 µm was blended. The results are set forth in Table 3.

Table 3

| | Example No. 8 | 9 | 10 | 11 | 12 | 13 |
|---|---|---|---|---|---|---|
| PA (wt%) | 20 | 20 | 50 | 60 | 60 | 20 |
| PPS (wt%) | 80 | 80 | 50 | 40 | 40 | 80 |
| Multi-phase Structure Thermoplastic Resin 1) (pts. wt.) | 15 | - | 15 | 15 | - | 15 |
| Graft Polymerization Precursor 1) (pts. wt.) | - | 15 | - | - | 20 | - |
| Glass Fiber 2) (pts. wt.) | 30 | - | 30 | 30 | - | 30 |
| Notched Izod Impact Strength (kg•cm/cm) | 80 | 60 | 70 | 78 | 75 | 80 |
| Heat Distortion Temperature (°C) (18.6 kg/cm$^2$) | 242 | 180 | 235 | 230 | 170 | 226 |
| Appearance (flow mark) | ◎ | ◎ | ◎ | ◎ | ◎ | ◎ |
| Appearance (gloss) | ◎ | ◎ | ◎ | ◎ | ◎ | ◎ |

1) Parts by weight based on 100 parts by weight of the (PA + PPS) resins.

2) Parts by weight based on 100 parts by weight of (PA + PPS + compatibilizing agent).

As described above, the thermoplastic resin compositions of the present invention which are blend systems of a polyamide resin and a polyarylene sulfide resin are excellent in impact resistance, heat resistance and surface appearance. On the contrary, the products of the comparative examples have still poor impact resistance and heat resistance as well as insufficient compatibility.

The thermoplastic resin composition of the present invention is a novel resin composition which maintains features of the polyamide resin and the polyarylene sulfide resin and which is excellent in impact resistance, heat resistance, moldability/workability and surface appearance. Therefore, the thermoplastic resin composition of the present invention can be widely utilized as materials for automobile parts, electrical and electronic parts, industrial parts, and the like.

## Claims

**1.** A thermoplastic resin composition containing

(I) 99 to 1% by weight of a polyamide resin,
(II) 1 to 99% by weight of a polyarylene sulfide resin and,
(III) 0.1 to 100 parts by weight, based on 100 parts by weight of said resins (I) + (II), of a multi-phase structure thermoplastic resin which is a graft copolymer comprising 5 to 95% by weight of an epoxy group-containing olefin copolymer and 95 to 5% by weight of a vinyl polymer or copolymer obtained from at least one vinyl monomer, selected from the group consisting of vinyl aromatic monomers, acrylate and methacrylate monomers, acrylonitrile and methacrylonitrile monomers, vinyl ester monomers, acryl amide and methacryl amide monomers, and monoesters and diesters of maleic anhydride and maleic acid, wherein the number average molecular weight of said vinyl polymer or copolymer in said multi-phase structure thermoplastic resin is from 5 to 10 000, either of both the components being in the state of a dispersion phase having a particle diameter of 0.001 to 10 μm in the other component.

**2.** A thermoplastic resin composition according to Claim 1, wherein said multi-phase structure thermoplastic resin is a graft polymerization precursor obtained by copolymerizing at least one vinyl monomer with at least one of radical polymerizable organic peroxides represented by the general formulae (a) and (b)

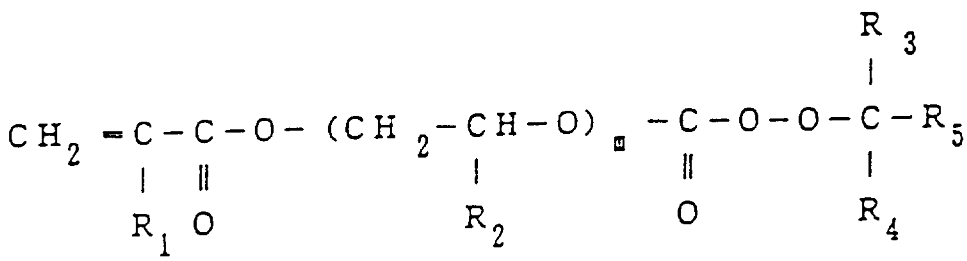
(a)

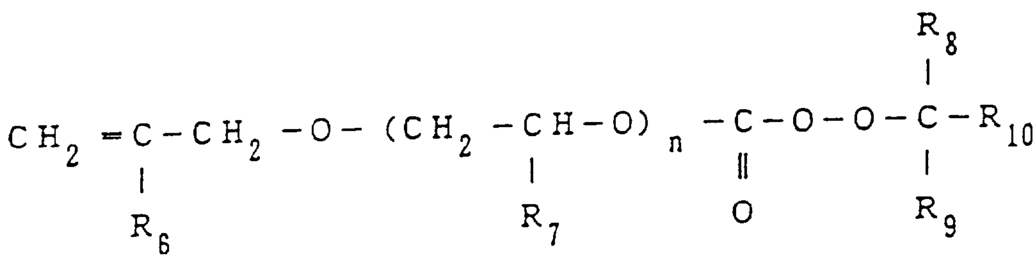
(b)

(wherein $R_1$ is a hydrogen atom or an alkyl group having 1 or 2 carbon atoms, each of $R_2$ and $R_7$ is a hydrogen atom or a methyl group, $R_6$ is a hydrogen atom or an alkyl group having 1 to 4 carbon atoms, each of $R_3$, $R_4$, $R_8$ and $R_9$ is an alkyl group having 1 to 4 carbon atoms, each of $R_5$ and $R_{10}$ is an alkyl group having 1 to 12 carbon atoms, a phenyl group, an alkyl-substituted phenyl group or a cycloalkyl group having 3 to 12 carbon atoms, m is 1 or 2, and n is 0, 1 or 2)
in particles of at least one epoxy group-containing olefin copolymer, or a multi-phase structure compound obtained by melting and kneading said graft polymerization precursor.

**3.** A thermoplastic resin composition according to Claim 1 or claim 2, wherein said epoxy group-containing olefin copolymer is a copolymer comprising 60 to 99.5% by weight of ethylene, 40 to 0.5% by weight of glycidyl acrylate and methacrylate, and 0 to 39.5% by weight of another unsaturated monomer.

**4.** A thermoplastic resin composition according to any of the Claims 1 to 3 containing an inorganic filler (IV) in an amount of 0 to 150 parts by weight with respect to 100 parts by weight of said thermoplastic resin composition comprising said components (I) + (II) + (III).

**5.** A thermoplastic resin composition according to any of the Claims 1 to 4 containing a flame retardant (V) in an amount of 5 to 150 parts by weight with respect to 100 parts by weight of said thermoplastic resin composition comprising said components (I) + (II) + (III).

**6.** A process for preparing a thermoplastic resin composition which comprises the step of melting and mixing a polyamide resin (I) and a polyarylene sulfide resin (II) with

a graft polymerization precursor which is obtained by first adding at least one vinyl monomer, selected from the group consisting of vinyl aromatic monomers, acrylate and methacrylate monomers, acrylonitrile and methacrylonitrile monomers, vinyl ester monomers, acryl amide and methacryl amide monomers, and monoesters and diesters of maleic anhydride and maleic acid, at least one radical polymerizable organic peroxide and a radical polymerization initiator to an aqueous suspension of an epoxy group-containing olefin copolymer, heating the suspension under such conditions that the decomposition of the radical polymerization initiator does not occur substantially, in order to impregnate the epoxy group-containing olefin copolymer with the vinyl monomer, the radical polymerizable organic peroxide and the radical polymerization initiator, and then raising the temperature of this aqueous suspension, when the degree of the impregnation has reached 50% by weight or more of the original total weight of the vinyl monomer, the peroxide and the initiator, in order to copolymerize the vinyl monomer with the radical polymerizable organic peroxide in the epoxy group-containing olefin copolymer,
or alternatively melting and mixing, with the above-mentioned resins (I) and (II), a multi-phase structure thermoplastic resin (III) obtained by previously melting/kneading the graft polymerization precursor at a temperature in the range of from 100 to 300°C.

7. A process according to Claim 6 wherein said radical polymerizable organic peroxide is one or a mixture of two or more of peroxycarbonate compounds represented by the general formulae (a) and (b)

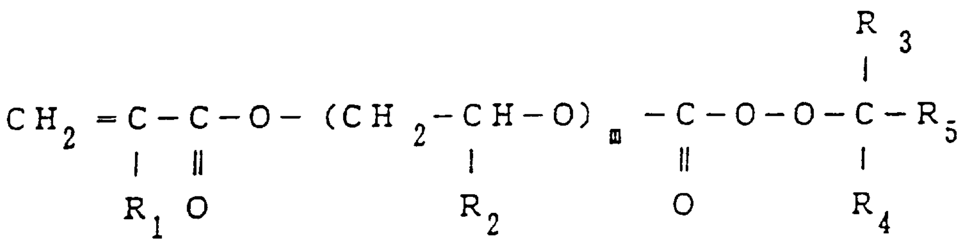
(a)

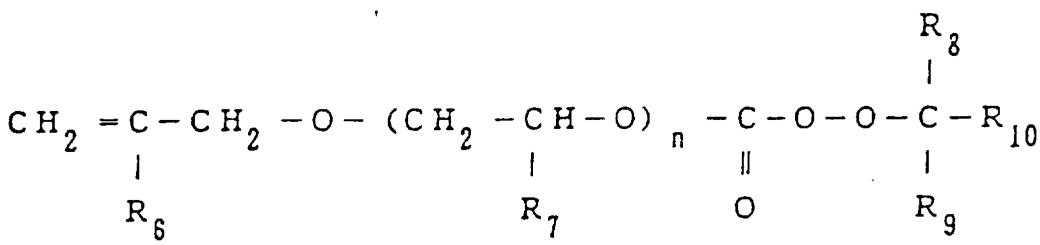
(b)

(wherein $R_1$ is a hydrogen atom or an alkyl group having 1 or 2 carbon atoms, each of $R_2$ and $R_7$ is a hydrogen atom or a methyl group, $R_6$ is a hydrogen atom or an alkyl group having 1 to 4 carbon atoms, each of $R_3$, $R_4$, $R_8$ and $R_9$ is an alkyl group having 1 to 4 carbon atoms, each of $R_5$ and $R_{10}$ is an alkyl group having 1 to 12 carbon atoms, a phenyl group, an alkyl-substituted phenyl group or a cycloalkyl group having 3 to 12 carbon atoms, m is 1 or 2, and n is 0, 1 or 2).

8. A process according to any of the Claims 6 or 7 wherein the number average molecular weight of said vinyl polymer or copolymer in said multi-phase structure thermoplastic resin is from 5 to 10000.

9. A process according to any of the Claims 6 to 8 wherein said epoxy group-containing olefin copolymer is a copolymer comprising 60 to 99.5% by weight of ethylene, 40 to 0.5% by weight of glycidyl acrylate and methacrylate, and 0 to 39.5% by weight of another unsaturated monomer.

10. A process according to any of the Claims 6 to 9 wherein an inorganic filler (IV) is added in an amount of 0 to 150 parts by weight with respect to 100 parts by weight of said thermoplastic resin composition comprising said components (I) + (II) + (III).

11. A process according to any of the Claims 6 to 10 wherein a flame retardant (V) is added in an amount of 5 to 150 parts by weight with respect to 100 parts by weight of said thermoplastic resin composition comprising said components (I) + (II) + (III).

**Patentansprüche**

1. Thermoplastische Harzzusammensetzung, enthaltend

   (I) 99 bis 1 Gew.-% eines Polyamidharzes,
   (II) 1 bis 99 Gew.-% eines Polyarylensulfidharzes und
   (III) 0,1 bis 100 Gew.-Teile, bezogen auf 100 Gew.-Teile der Harze (I) + (II), eines thermoplastischen Harzes mit Mehrphasenstruktur, das ein Pfropfcopolymer ist, enthaltend 5 bis 95 Gew.-% eines eine Epoxygruppe enthaltenden Olefincopolymers und 95 bis 5 Gew.-% eines Vinylpolymers oder Vinylcopolymers, das erhalten wird aus mindestens einem Vinylmonomeren, ausgewählt unter aromatischen Vinylmonomeren, Acrylat- und Methacrylatmonomeren, Acrylnitril- und Methacrylnitrilmonomeren, Vinylestermonomeren, Acrylamid- und Methacrylamidmonomeren und Monoestern und Diestern von Maleinsäureanhydrid und Maleinsäure, wobei das Zahlenmittel des Molekulargewichts des Vinylpolymers oder Vinylcopolymers in dem thermoplastischen Harz mit Mehrphasenstruktur 5 bis 10.000 beträgt, wobei eine der beiden Komponenten im Zustand einer in der jeweils anderen Komponente dispergierten Phase mit einem Partikeldurchmesser von 0,001 bis 10 µm vorliegt.

2. Thermoplastische Harzzusammensetzung gemäß Anspruch 1, wobei das thermoplastische Harz mit Mehrphasenstruktur ein Pfropfpolymerisations-Vorläufer ist, der erhalten wird durch Copolymerisation von mindestens einem Vinylmonomeren mit mindestens einem der radikalisch polymerisierbaren organischen Peroxide, die durch die allgemeinen Formeln (a) und (b) dargestellt sind

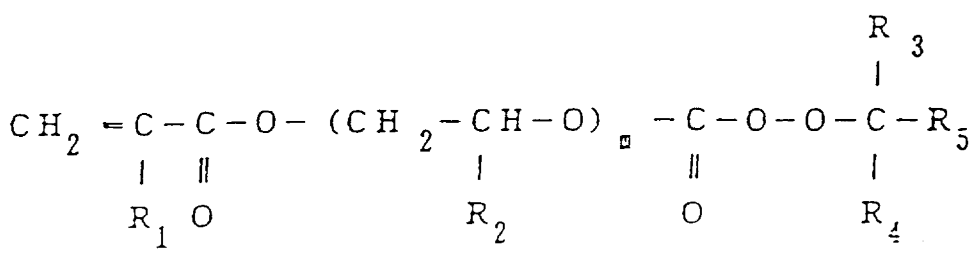

(a)

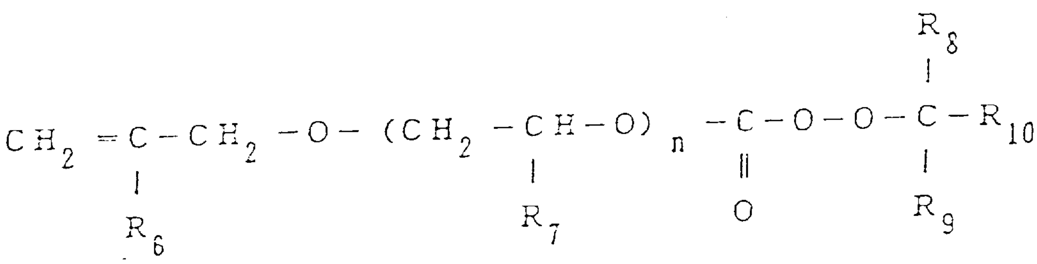

(b)

(wobei $R_1$ ein Wasserstoffatom oder eine Alkylgruppe mit 1 oder 2 Kohlenstoffatomen ist, $R_2$ und $R_7$ jeweils ein Wasserstoffatom oder eine Methylgruppe sind, $R_6$ ein Wasserstoffatom oder eine Alkylgruppe mit 1 bis 4 Kohlenstoffatomen ist, $R_3$, $R_4$, $R_8$ und $R_9$ jeweils eine Alkylgruppe mit 1 bis 4 Kohlenstoffatomen sind, $R_5$ und $R_{10}$ jeweils eine Alkylgruppe mit 1 bis 12 Kohlenstoffatomen, eine Phenylgruppe, eine alkylsubstituierte Phenylgruppe oder eine Cycloalkylgruppe mit 3 bis 12 Kohlenstoffatomen sind, m 1 oder 2 ist und n 0, 1 oder 2 ist),
in Partikeln aus mindestens einem eine Epoxygruppe enthaltenden Olefincopolymeren, oder eine Verbindung mit Mehrphasenstruktur, die erhalten wird durch Schmelzen und Kneten des Pfropfpolymerisations-Vorläufers.

3. Thermoplastische Harzzusammensetzung gemäß Anspruch 1 oder 2, wobei das die Epoxygruppe enthaltende Olefincopolymer ein Copolymer ist, das 60 bis 99,5 Gew.-% Ethylen, 40 bis 0,5 Gew.-% Glycidylacrylat oder Glycidylmethacrylat und 0 bis 39,5 Gew.-% eines anderen ungesättigten Monomeren enthält.

4. Thermoplastische Harzzusammensetzung gemäß einem der Ansprüche 1 bis 3, enthaltend einen anorganischen Füllstoff (IV) in einer Menge von 0 bis 150 Gew.-Teilen, bezogen auf 100 Gew.-Teile der thermoplastischen Harzzusammensetzung, welche die Komponenten (I) + (II) + (III) umfaßt.

5. Thermoplastische Harzzusammensetzung gemäß einem der Ansprüche 1 bis 4, enthaltend ein Flammschutzmittel (V) in einer Menge von 5 bis 150 Gew.-Teilen, bezogen auf 100 Gew.- Teile der thermoplastischen Harzzusammensetzung, welche die Komponenten (I) + (II) + (III) umfaßt.

**6.** Verfahren zur Herstellung einer thermoplastischen Harzzusammensetzung, das den Schritt des Schmelzens und Mischens eines Polyamidharzes (I) und eines Polyarylensulfidharzes (II) mit

einem Pfropfpolymerisations-Vorläufer beinhaltet, der erhalten wird, indem zuerst mindestens ein unter aromatischen Vinylmonomeren, Acrylat- und Methacrylatmonomeren, Acrylnitril- und Methacrylnitrilmonomeren, Vinylestermonomeren, Acrylamid- und Methacrylamidmonomeren und Monoestern und Diestern von Maleinsäureanhydrid und Maleinsäure ausgewähltes Vinylmonomeres, mindestens ein radikalisch polymerisierbares organisches Peroxid und ein Radikalpolymerisations-Initiator zu einer wäßrigen Suspension eines eine Epoxygruppe enthaltenden Olefincopolymers gegeben wird,
dann die Suspension unter solchen Bedingungen erhitzt wird, daß die Zersetzung des Radikalpolymerisations-Initiators nicht wesentlich eintritt, um das die Epoxygruppe enthaltende Olefincopolymer mit dem Vinylmonomeren, dem radikalisch polymerisierbaren organischen Peroxid und dem Radikalpolymerisations-Initiators zu imprägnieren,
und dann die Temperatur dieser wäßrigen Suspension erhöht wird, wenn der Grad der Imprägnierung mindestens 50 Gew.-% des ursprünglichen Gesamtgewichts des Vinylmonomeren, des Peroxids und des Initiators erreicht hat, um das Vinylmonomere mit dem radikalisch polymerisierbaren organischen Peroxid in dem die Epoxygruppe enthaltenden Olefincopolymer zu copolymerisieren,
oder alternativ das Schmelzen und Vermischen der Harze (I) und (II) mit einem thermoplastischen Harz mit Mehrphasenstruktur (III) umfaßt, wobei das thermoplastische Harz mit Mehrphasenstruktur (III) durch vorheriges Schmelzen/ Kneten des Pfropfpolmerisations-Vorläufers in einem Temperaturbereich von 100 bis 300 °C erhalten wird.

**7.** Verfahren gemäß Anspruch 6, wobei das radikalisch polymerisierbare organische Peroxid eines oder ein Gemisch aus zwei oder mehr der Peroxycarbonatverbindungen ist, welche durch die allgemeinen Formeln (a) und (b) dargestellt sind

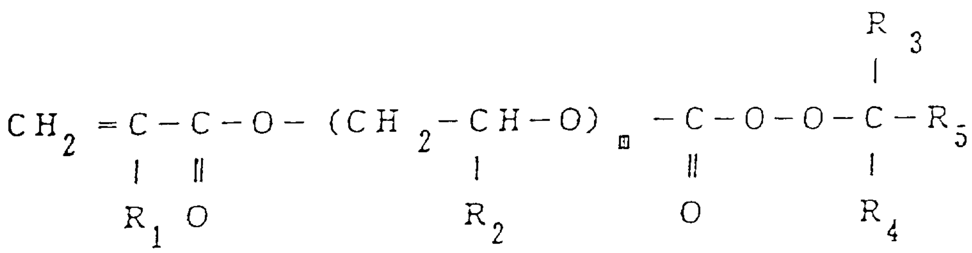
(a)

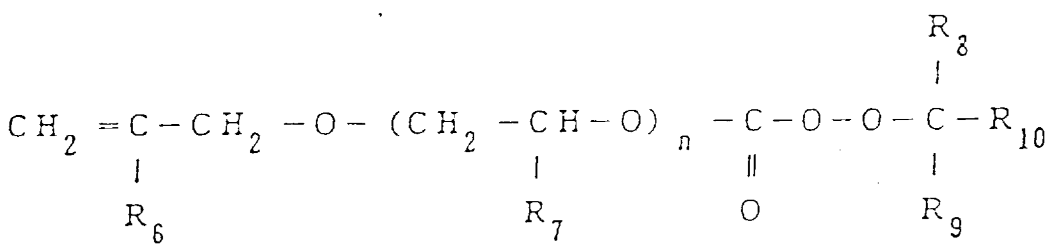
(b)

(wobei $R_1$ ein Wasserstoffatom oder eine Alkylgruppe mit 1 oder 2 Kohlenstoffatomen ist, $R_2$ und $R_7$ jeweils ein Wasserstoffatom oder eine Methylgruppe sind, $R_6$ ein Wasserstoffatom oder eine Alkylgruppe mit 1 bis 4 Kohlenstoffatomen ist, $R_3$, $R_4$, $R_8$ und $R_9$ jeweils eine Alkylgruppe mit 1 bis 4 Kohlenstoffatomen sind, $R_5$ und $R_{10}$ jeweils eine Alkylgruppe mit 1 bis 12 Kohlenstoffatomen, eine Phenylgruppe, eine alkylsubstituierte Phenylgruppe oder eine Cycloalkylgruppe mit 3 bis 12 Kohlenstoffatomen sind, m 1 oder 2 ist und n 0, 1 oder 2 ist).

**8.** Verfahren gemäß einem der Ansprüche 6 oder 7, wobei das Zahlenmittel des Molekulargewichts des Vinylpolymers oder Vinylcopolymers in der thermoplastischen Harzzusammensetzung mit Mehrphasenstruktur 5 bis 10.000 beträgt.

**9.** Verfahren gemäß einem der Ansprüche 6 bis 8, wobei das die Epoxygruppe enthaltende Olefincopolymer ein Copolymer ist, das 60 bis 99,5 Gew.-% Ethylen, 40 bis 0,5 Gew.-% Glycidylacrylat und Glycidylmethacrylat und 0 bis 39,5 Gew.-% eines anderen ungesättigten Monomeren enthält.

**10.** Verfahren gemäß einem der Ansprüche 6 bis 9, wobei der anorganische Füllstoff (IV) in einer Menge von 0 bis 150

Gew.-Teilen, bezogen auf 100 Gew.-Teile der thermoplastischen Harzzusammensetzung, enthaltend die Komponenten (I) + (II) + (III), zugesetzt wird.

**11.** Verfahren gemäß einem der Ansprüche 6 bis 10, wobei das Flammschutzmittel (V) in einer Menge von 5 bis 150 Gew.- Teilen, bezogen auf 100 Gew.-Teile der thermoplastischen Harzzusammensetzung, enthaltend die Komponenten (I) + (II) + (III), zugesetzt wird.

**Revendications**

**1.** Composition de résine thermoplastique contenant

(I) 99 à 1 % en poids d'une résine polyamide,
(II) 1 à 99 % en poids d'une résine poly(sulfure d'arylène) et,
(III) 0,1 à 100 parties en poids, par rapport à 100 parties en poids desdites résines (I) + (II), d'une résine thermoplastique à structure multiphasée qui est un copolymère greffé comprenant 5 à 95 % en poids d'un copolymère oléfine contenant un groupe époxy et 95 à 5 % en poids d'un polymère ou copolymère vinylique obtenu à partir d'au moins un monomère vinylique, choisi dans le groupe constitué des monomères aromatiques vinyliques, des monomères acrylates et méthacrylates, des monomères acrylonitriles et méthacrylonitriles, des monomères esters vinyliques, des monomères amides acryliques et amides méthacryliques, et des monoesters et diesters d'anhydride maléique et d'acide maléique, où le poids moléculaire moyen en nombre dudit copolymère ou polymère vinylique dans ladite résine thermoplastique à structure multiphasée est de 5 à 10 000, l'un ou l'autre des deux composants étant à l'état d'une phase dispersée ayant un diamètre de particule de 0,001 à 10 µm dans l'autre composant.

**2.** Composition de résine thermoplastique selon la revendication 1, où ladite résine thermoplastique à structure multiphasée est un précurseur de polymérisation par greffage obtenu par copolymérisation d'au moins un monomère vinylique avec au moins l'un des peroxydes organiques polymérisables par voie radicalaire représenté par les formules générales (a) et (b):

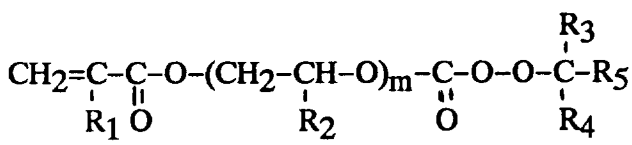 (a)

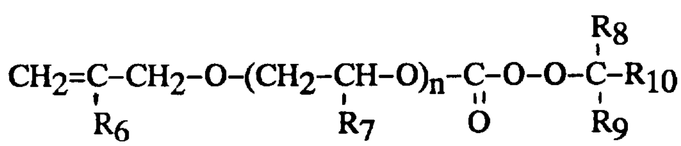 (b)

(où $R_1$ est un atome d'hydrogène ou un groupe alkyle ayant 1 à 2 atomes de carbone, chacun des groupes $R_2$ et $R_7$ est un atome d'hydrogène ou un groupe méthyle, $R_6$ est un atome d'hydrogène ou un groupe alkyle ayant 1 à 4 atomes de carbone, chacun des groupes $R_3$, $R_4$, $R_8$ et $R_9$ est un groupe alkyle ayant 1 à 4 atomes de carbone, chacun des groupes $R_5$ et $R_{10}$ est un groupe alkyle ayant 1 à 12 atomes de carbone, un groupe phényle, un groupe phényle alkyl-substitué ou un groupe cycloalkyle ayant 3 à 12 atomes de carbone, m est 1 ou 2, et n est 0, 1 ou 2) dans des particules d'au moins un copolymère d'oléfine contenant un groupe époxy, ou un composé à structure multiphasée obtenu en faisant fondre et en malaxant ledit précurseur de polymérisation par greffage.

**3.** Composition de résine thermoplastique selon la revendication ou la revendication 2, où ledit copolymère d'oléfine contenant un groupe époxy est un copolymère comprenant 60 à 99,5 % en poids d'éthylène, 40 à 0,5 % en poids d'acrylate de glycidyle et de méthacrylate de glycidyle, et 0 à 39,5 % en poids d'un autre monomère insaturé.

**4.** Composition de résine thermoplastique selon l'une quelconque des revendications 1 à 3 contenant une charge minérale (IV) en une quantité de 0 à 150 parties en poids par rapport à 100 parties en poids de ladite composition de résine thermoplastique comprenant lesdits composants (I) + (II) + (III).

**5.** Composition de résine thermoplastique selon l'une quelconque des revendications 1 à 4 contenant un retardateur

de flamme (V) en une quantité de 5 à 150 parties en poids par rapport à 100 parties en poids de ladite composition de résine thermoplastique comprenant lesdits composants (I) + (II) + (III).

6. Procédé de préparation d'une composition de résine thermoplastique qui comprend l'étape de faire fondre et de mélanger une résine polyamide (I) et une résine poly(sulfure d'arylène) (II) avec

   un précurseur de polymérisation par greffage qui est obtenu en ajoutant d'abord au moins un monomère vinylique,
   choisi dans le groupe constitué des monomères aromatiques vinyliques, des monomères acrylates et méthacrylates, des monomères acrylonitriles et méthacrylonitriles, des monomères esters vinyliques, des monomères amides acryliques et amides méthacryliques, et des monoesters et diesters d'anhydride maléique et d'acide maléique, au moins un peroxyde organique polymérisable par voie radicalaire et un initiateur de polymérisation radicalaire ajouté à une suspension aqueuse d'un copolymère oléfinique contenant un groupe époxy, on chauffe la suspension dans des conditions telles que la décomposition de l'initiateur de polymérisation par voie radicalaire ne se produise pas notablement, en vue d'imprégner le copolymère d'oléfine contenant un groupe époxy avec le monomère vinylique, le peroxyde organique polymérisable par voie radicalaire et l'initiateur de polymérisation radicalaire, et ensuite on augmente la température de cette suspension aqueuse, quand le degré d'imprégnation a atteint 50 % en poids ou plus du poids total d'origine du monomère vinylique, du peroxyde et de l'initiateur, pour copolymériser le monomère vinylique avec le peroxyde organique polymérisable par voie radicalaire dans le copolymère d'oléfine contenant un groupe époxy,
   où en variante, on fond et on mélange, avec les résines (I) et (II) mentionnées ci-dessus, une résine (III) thermoplastique à structure multiphasée obtenue par fusion/ malaxage préalable du précurseur de polymérisation par greffage à une température comprise entre 100 et 300°C.

7. Procédé selon la revendication 6, où ledit peroxyde organique polymérisable par voie radicalaire est un ou un mélange de deux ou plusieurs composés peroxycarbonates représentés par les formules générales (a) et (b):

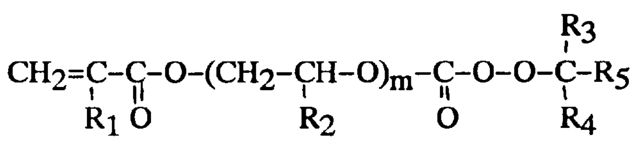 (a)

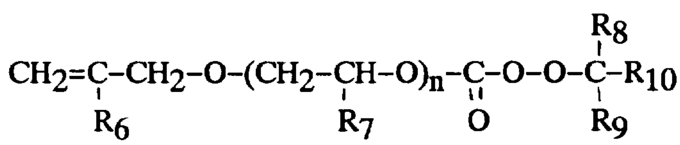 (b)

   (où $R_1$ est un atome d'hydrogène ou un groupe alkyle ayant 1 à 2 atomes de carbone, chacun des groupes $R_2$ et $R_7$ est un atome d'hydrogène ou un groupe méthyle, $R_6$ est un atome d'hydrogène ou un groupe alkyle ayant 1 à 4 atomes de carbone, chacun des groupes $R_3$, $R_4$, $R_8$ et $R_9$ est un groupe alkyle ayant 1 à 4 atomes de carbone, chacun des groupes $R_5$ et $R_{10}$ est un groupe alkyle ayant 1 à 12 atomes de carbone, un groupe phényle, un groupe phényle alkyl-substitué ou un groupe cycloalkyle ayant 3 à 12 atomes de carbone, m est 1 ou 2, et n est 0, 1 ou 2).

8. Procédé selon l'une quelconque des revendications 6 ou 7, où le poids moléculaire moyen en nombre dudit polymère ou copolymère vinylique dans ladite résine thermoplastique à structure multiphasée est de 5 à 10 000.

9. Procédé selon l'une quelconque des revendications 6 à 8, où ledit copolymère oléfine contenant un groupe époxy est un copolymère contenant 60 à 99,5 % en poids d'éthylène, 40 à 0,5 % en poids d'acrylate et de méthacrylate de glycidyle, et 0 à 39,5 % en poids d'un autre monomère insaturé.

10. Procédé selon l'une quelconque des revendications 6 à 9, où on ajoute une charge minérale (IV) en une quantité de 0 à 150 parties en poids par rapport à 100 parties en poids de ladite composition de résine thermoplastique comprenant lesdits composants (I) + (II) + (III).

11. Procédé selon l'une quelconque des revendications 6 à 10, où on ajoute un retardateur de flamme (V) en une quantité de 5 à 150 parties en poids par rapport à 100 parties en poids de ladite composition de résine thermoplastique comprenant lesdits composants (I) + (II) + (III).